# FASCICULE DE BREVET EUROPEEN

(11) **EP 2 501 964 B1**
(45) Date de publication et mention de la délivrance du brevet: **06.11.2013**
(21) Numéro de dépôt: 10788101.3
(22) Date de dépôt: 15.11.2010
(51) Int. Cl.: F16K 5/04, F16K 11/085

(54) **VANNE A OBTURATEUR ROTATIF ET INSTALLATION DE TRAITEMENT D'EAU COMPORTANT UNE TELLE VANNE**
VENTIL MIT EINEM DREHBAREN SCHLIESSELEMENT UND EINE WASSERAUFBEREITUNGSANLAGE MIT EINEM DERARTIGEN VENTIL
VALVE WITH A ROTATING CLOSURE MEMBER AND WATER TREATMENT INSTALLATION HAVING SUCH A VALVE

(30) Priorité: 16.11.2009 FR 0905487
(43) Date de publication de la demande: 26.09.2012
(73) Titulaire: Arkling Limited, Marina Bay (GI)
(72) Inventeur: MARINZET, Bernard, Laurent, Gilbert, 13160 Châteaurenard (FR)
(74) Mandataire: Bugnion Genève
(86) Numéro de dépôt international: PCT/FR2010/000758
(87) Numéro de publication internationale: WO 2011/058249

(56) Documents cités:
- EP-A1- 1 862 713
- EP-A2- 1 988 314
- EP-A2- 2 103 852
- WO-A1-03/006858
- WO-A1-2006/053414
- WO-A1-2009/022433
- WO-A2-2006/025054
- DE-A1-102005 031 962
- US-A- 2 503 639
- US-A- 3 023 779
- US-A- 3 572 383
- US-A1- 2007 044 856

## Description

### DOMAINE TECHNIQUE

La présente invention est relative à une vanne à obturateur rotatif et à une installation de traitement d'eau comportant une telle vanne.

L'invention est notamment relative aux vannes à trois voies (i.e. trois interfaces de raccordement) motorisées et aux installations de traitement d'eau de mer ou d'eau saumâtre par osmose inverse qui incorporent de telles vannes.

Dans la présente demande, sauf indication explicite ou implicite contraire, les termes « cylindre » et « cylindrique » se réfèrent à un corps délimité par - ou une forme ou une surface engendrée par - des droites parallèles s'appuyant sur un contour fermé qui peut être circulaire.

### ETAT DE LA TECHNIQUE

Dans les installations de dessalement d'eau de mer par osmose inverse, on délivre l'eau à traiter à l'entrée d'un dispositif de filtration, à une pression d'entrée qui est supérieure à la pression osmotique de l'eau ; généralement, étant donné que la pression osmotique de l'eau salée est de 25 bars, la pression d'alimentation en eau à l'entrée du filtre est au moins égale à 25 bars, par exemple de l'ordre de 30 à 100 bars, en particulier de l'ordre de 60 à 80 bars ; on récupère en sortie du filtre un concentrât d'eau dite « sursalée » d'une part, et un perméat d'eau dessalée (qui est à une pression voisine de la pression atmosphérique) d'autre part ; la pression du concentrât en sortie du filtre est généralement peu inférieure à la pression d'alimentation d'eau à dessaler, par exemple inférieure à celle-ci d'une valeur de l'ordre de 1 à 5 bars, étant donné que la chute de pression dans le filtre est faible.

Les brevets FR2342252 et US4124488 décrivent une installation d'épuration d'eau par osmose inverse comportant une pompe à piston délivrant l'eau sous pression à l'entrée d'un module d'osmose inverse (MOI), et recevant l'eau sursalée pressurisée sortant du module MOI, par l'intermédiaire d'une soupape commandée, afin d'utiliser l'énergie de l'eau sursalée pressurisée pour comprimer/ pressuriser l'eau à dessaler.

Le piston de la pompe est entraîné dans un mouvement de translation alternatif par un moteur électrique.

Selon un mode de réalisation, une partie arrière du piston présente deux rainures longitudinales périphériques de sorte que, le piston étant entraîné en outre dans un mouvement d'oscillation angulaire, le piston forme un obturateur mettant en communication une chambre de la pompe s'étendant en arrière du piston, soit avec un conduit de transport d'eau sursalée provenant du MOI, soit avec un conduit de décharge.

Un inconvénient de cette installation est que la mise en oscillation angulaire du piston nécessite la mise en oscillation angulaire du corps de la pompe, ce qui provoque une consommation inutile d'énergie. Cette mise en oscillation angulaire du corps de la pompe nécessite de raccorder la pompe aux circuits de l'installation par l'intermédiaire de raccords flexibles, ce qui présente des difficultés de réalisation en raison notamment de la pression de l'eau circulant dans l'installation.

Les brevets EP1194691 et US 6652741 décrivent une installation de traitement d'eau de mer dans laquelle plusieurs pompes à piston sont entraînées par l'intermédiaire d'une centrale hydraulique et sont pilotées pour assurer un temps d'arrêt de chaque piston, à chaque fin de course du piston considéré, et pour assurer un débit cumulé constant.

L'admission d'eau sursalée dans une chambre de chaque pompe pour la récupération de l'énergie du « concentrât » ainsi que l'évacuation ultérieure de ce concentrât, sont réalisées par un distributeur - ou vanne - à trois voies.

Ce dispositif, vanne ou distributeur, doit répondre à plusieurs contraintes : il doit permettre le passage d'un débit élevé d'eau sans provoquer de pertes de charge importantes ; il doit être conçu pour supporter la pression élevée (de l'ordre de 60 à 80 bar par exemple) de l'eau sursalée sortant des filtres osmotiques ; en outre, lorsqu'il n'est pas prévu d'arrêter les pistons des pompes en fin de course pendant une durée suffisante, ce dispositif doit alors passer d'une configuration d'admission d'eau dans la pompe à une configuration d'évacuation d'eau hors de la pompe, de façon sensiblement instantanée, au moment précis de l'arrêt en fin de course du piston de pompe considéré.

De telles vannes sont déjà connues par le document EP 1988314.

Les vannes et distributeurs connus ne répondent pas à ces contraintes, de façon simple et fiable.

### EXPOSÉ DE L'INVENTION

Un objectif de l'invention est de proposer une vanne ou distributeur simple à fabriquer et à installer, présentant une durée de vie et une fiabilité élevées, occasionnant peu de pertes de charge, permettant de fermer de façon sensiblement étanche un conduit de transport d'eau sursalée reliant un module de filtration à une pompe à piston, et pouvant passer - « basculer » -, sensiblement instantanément, d'une configuration d'alimentation dans laquelle la vanne est traversée par un courant d'eau sursalée pressurisée alimentant la pompe, à une configuration d'évacuation/vidange dans laquelle la vanne est traversée par un courant d'eau sursalée évacuée hors de la pompe.

Un objectif de l'invention est de proposer une vanne ou distributeur qui soit amélioré(e) et/ou qui remédie, en partie au moins, aux lacunes ou inconvénients des vannes et distributeurs connus.

Un objectif de l'invention est de proposer une installation de traitement d'eau de mer ou d'eau saumâtre comportant une pompe et une vanne à trois voies pour l'alimentation de la pompe en eau sursalée et pour l'évacuation de l'eau sursalée, qui soit améliorée et/ou qui remédie, en partie au moins, aux lacunes ou inconvénients des installations de traitement d'eau connues.

Selon un aspect de l'invention, il est proposé une vanne comportant :
- un corps de vanne délimitant une cavité, le corps étant pourvu/percé d'un premier orifice permettant l'introduction d'eau dans la cavité, d'un second orifice permettant l'évacuation d'eau hors de la cavité, et d'un troisième orifice permettant de mettre en communication la cavité et une chambre d'une pompe;
- un obturateur monté mobile en rotation à l'intérieur de la cavité, l'obturateur comportant une dépression sur sa face externe, cette dépression contribuant avec le corps à former/délimiter un passage - qui tourne avec l'obturateur - permettant la circulation d'eau entre les premier et troisième orifices dans des premières positions angulaires de l'obturateur - correspondant à une configuration de la vanne permettant l'alimentation de la pompe -, ledit passage permettant en outre la circulation d'eau entre les second et troisième orifices dans des secondes positions angulaires de l'obturateur - correspondant à une configuration de la vanne permettant la vidange de la pompe -;
- un premier dispositif d'étanchéité permettant d'assurer une obturation sensiblement étanche du premier orifice par l'obturateur dans lesdites secondes positions angulaires de l'obturateur ; et
- un second dispositif d'étanchéité permettant d'assurer une obturation sensiblement étanche du second orifice par l'obturateur dans lesdites premières positions angulaires de l'obturateur.

Notamment lorsque la face externe de l'obturateur est cylindrique, la dépression peut prendre la forme d'une rainure ou méplat s'étendant le long d'un axe orthogonal à l'axe de révolution/rotation de l'obturateur, et présenter une largeur sensiblement/peu inférieure au diamètre des premier et second orifices.

De préférence, outre ladite dépression - première dépression -, ledit passage comporte une seconde dépression à la périphérie/surface de l'obturateur, en particulier une seconde dépression de forme sensiblement annulaire qui s'étend - en partie au moins - en regard du troisième orifice, ainsi qu'un canal creusé dans l'obturateur et reliant lesdites première et seconde dépressions.

La section de ce canal peut être peu inférieure, égale, ou supérieure, à celle des premier et second orifices, afin de limiter les pertes de charge occasionnées par le passage de l'eau dans ce canal et par conséquent dans la vanne.

En d'autres termes et selon un autre aspect de l'invention, il est proposé une vanne comportant un corps délimitant une cavité et percé de trois orifices, ainsi qu'un obturateur - ou boisseau - monté mobile en rotation à l'intérieur du corps ; le corps comporte deux logements débouchant dans la cavité et entourant respectivement deux des trois orifices ; la vanne comporte en outre deux organes d'étanchéité respectivement disposés coulissants dans les deux logements, ainsi que deux dispositifs d'appui permettant respectivement de mettre en appui les deux organes d'étanchéité contre l'obturateur, afin d'assurer une obturation sensiblement étanche d'un premier des trois orifices, par l'obturateur, dans des secondes positions angulaires de l'obturateur et afin d'assurer une obturation sensiblement étanche d'un second des trois orifices, par l'obturateur, dans des premières positions angulaires de l'obturateur - distinctes des secondes positions angulaires-.

Selon un mode de réalisation préférentiel, les logements sont en forme de fentes annulaires et les organes d'étanchéité présentent une forme annulaire - ou tubulaire - adaptée à la forme de la partie de l'obturateur contre laquelle ils s'appliquent, en particulier une forme découpée en biseau selon un rayon correspondant au rayon d'une partie cylindrique de l'obturateur.

De préférence, chacun des dispositifs d'appui comporte un canal, en particulier plusieurs canaux, qui relie(nt) une extrémité du logement considéré qui est opposée à l'extrémité (du logement considéré) qui débouche dans la cavité : le dispositif d'appui associé à l'organe d'étanchéité entourant un premier des orifices, comporte au moins un canal reliant l'extrémité non débouchante du logement considéré à un manchon de raccordement de la vanne à un conduit transportant l'eau venant d'un module de filtration, tandis que le dispositif d'appui associé à l'organe d'étanchéité entourant un second des orifices, comporte au moins un canal reliant l'extrémité non débouchante du logement considéré, à la cavité.

Ces canaux permettent de mettre en équipression l'extrémité non débouchante du logement considéré et le conduit transportant l'eau venant du module de filtration, respectivement la cavité, et permettent par conséquent de plaquer contre l'obturateur l'extrémité « profilée » de chacun des organes d'étanchéité coulissants, notamment lorsque ces organes présentent une épaisseur amoindrie dans leur portion annulaire affleurant à la surface délimitant la cavité.

Par ailleurs, à cet effet, chacun des dispositifs d'appui peut comporter un organe élastiquement déformable, tel qu'un ressort, disposé dans le logement correspondant, entre l'extrémité non débouchante du logement et l'extrémité de l'organe d'étanchéité correspondant, pour maintenir en contact mutuel l'obturateur et l'organe d'étanchéité lorsque la vanne n'est pas entrainée et qu'aucun courant d'eau ne la traverse.

Selon d'autres caractéristiques préférentielles :
- les premier et second orifices sont en regard mutuel, alignés selon un axe (sensiblement) orthogonal à l'axe de révolution de la cavité - qui correspond à l'axe de rotation de l'obturateur -, ces deux axes étant (sensiblement) coplanaires ;
- le corps de vanne est percé de deux autres orifices - quatrième et cinquième orifices - qui sont en regard mutuel, alignés selon un axe (sensiblement) confondu avec l'axe de révolution de la cavité, et l'obturateur est solidaire en rotation d'un arbre d'entraînement s'étendant au travers de ces deux orifices.

Selon un autre aspect de l'invention, il est proposé une installation de traitement d'eau comportant un module de filtration d'eau, une pompe à piston, un moteur, un mécanisme d'entraînement de la pompe par le moteur, ainsi qu'une vanne à trois voies à boisseau rotatif telle que décrite dans la présente demande, la vanne équipant un conduit reliant la pompe au module de filtration, l'obturateur de la vanne étant entraîné en rotation sensiblement continue par le moteur, en synchronisme avec la pompe.

Selon un mode de réalisation, l'obturateur est entraîné de manière à tourner d'un tour lorsque le piston de la pompe effectue un cycle complet, i.e. une course aller et une course de retour.

La rotation continue de l'obturateur, généralement avec une vitesse de rotation sensiblement constante, et les caractéristiques de l'obturateur permettent à la vanne de passer sensiblement instantanément d'une configuration d'alimentation - de la pompe - en eau sursalée sous pression à une configuration d'évacuation de l'eau sursalée, en particulier lorsque les diamètres respectifs des premier et second orifices sont égaux et que la profondeur de la première dépression est égale à la différence entre le rayon de l'obturateur - au droit de cette dépression - et le rayon des orifices.

Selon un mode de réalisation, l'obturateur assure une fermeture « totale » de la vanne pour seulement deux positions angulaires déterminées de l'obturateur : dans chacune de ces positions, l'obturateur ferme le passage entre les premier et troisième orifices ainsi que le passage entre les second et troisième orifices - et également le passage entre les premier et second orifices -.

En d'autres termes, selon ce mode de réalisation, les premières positions angulaires de l'obturateur sont adjacentes de manière à former une première plage angulaire continue de premières positions angulaires de l'obturateur, qui s'étend sensiblement sur 180° (degrés d'angle), et les secondes positions angulaires de l'obturateur sont également adjacentes de manière à former une seconde plage angulaire continue de secondes positions angulaires de l'obturateur, qui s'étend également sur 180°.

D'autres aspects, caractéristiques, et avantages de l'invention apparaissent dans la description suivante qui se réfère aux figures annexées et illustre, sans aucun caractère limitatif, des modes préférés de réalisation de l'invention.

### BREVE DESCRIPTION DES FIGURES

La figure 1 est schéma d'une installation de traitement d'eau selon un mode de réalisation de l'invention.
La figure 2 est une vue en perspective schématique d'une vanne selon un mode de réalisation de l'invention, dont l'obturateur est en position de fermeture de la vanne, avec arrachement : sur cette figure, comme sur les figures 4 à 6, seule apparaît la partie du corps de vanne s'étendant sous un plan contenant l'axe longitudinal du corps - et du rotor - ainsi que l'axe passant par les centres des premier et second orifices, l'autre partie du corps s'étendant au dessus de ce plan étant « arrachée » (non présentée) pour permettre de visualiser le rotor de la vanne.
La figure 3 est une vue en perspective schématique du rotor - incluant l'obturateur - de la vanne illustrée figures 2 et 4 à 11.
Les figures 4 à 6 sont des vues en perspective schématique similaires à la figure 2, qui montrent le rotor de la vanne dans d'autres positions angulaires.
La figure 7 est une vue en coupe longitudinale de la vanne selon un premier plan de coupe contenant l'axe de deux manchons de raccordement de la vanne à un module de filtration - pour l'un des manchons - et à un circuit de vidange - pour le second manchon.
La figure 8 est une vue en coupe longitudinale de la vanne selon un second plan de coupe perpendiculaire au premier et contenant l'axe d'un troisième manchon de raccordement de la vanne à une pompe à piston.
La figure 9 est une vue en coupe transversale de la vanne selon un troisième plan de coupe perpendiculaire aux deux premiers et contenant l'axe du troisième manchon de raccordement : cette figure est une vue selon IX-IX de la figure 7.
La figure 10 est une vue en coupe longitudinale selon le premier plan de coupe illustrant, à échelle agrandie, le manchon de raccordement de la vanne des figures 2 et 4 à 11 au circuit de vidange.
La figure 11 est une vue en coupe longitudinale selon le premier plan de coupe illustrant, à échelle agrandie, le manchon de raccordement de la vanne des figures 2 et 4 à 11 au module de filtration.
La figure 12 est une vue en coupe selon le premier plan de coupe illustrant, à échelle plus agrandie, un autre mode de réalisation du dispositif d'étanchéité équipant le manchon de raccordement de la vanne à un module de filtration.

### DESCRIPTION DETAILLEE DE L'INVENTION

Sauf indication explicite ou implicite contraire, des éléments ou organes - structurellement ou fonctionnellement - identiques ou similaires sont désignés par des repères identiques sur les différentes figures.

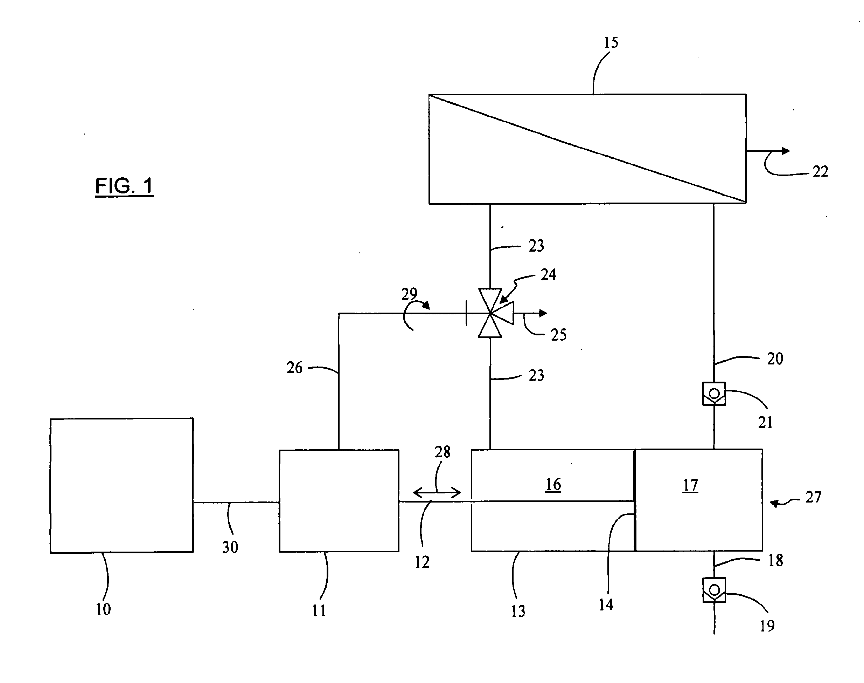

Par référence à la figure 1, l'installation de traitement d'eau comporte un module 15 de filtration d'eau, une pompe 27 à piston, un moteur électrique 10, un mécanisme 11 d'entraînement de la pompe par l'arbre 30 de sortie du moteur, ainsi qu'une vanne 24 à trois voies à boisseau rotatif.

La pompe 27 comporte un corps 13 délimitant une cavité cylindrique 16, 17 à l'intérieur de laquelle le piston 14 de la pompe est entraîné en translation alternative 28, le piston séparant la cavité en deux chambres : une première chambre 16 recevant l'eau sursalée évacuée du module 15, et une seconde chambre 17 recevant l'eau à pomper et à délivrer sous pression au module 15.

Le piston 14 est relié par une tige 12 au mécanisme 11.

La pompe 27 reçoit l'eau à pomper délivrée par un conduit 18 de transport d'eau équipé d'un clapet 19 d'admission (clapet anti-retour).

L'eau pressurisée par la pompe 27 est transportée jusqu'au module 15 par un conduit 20 équipé d'un clapet 21 de refoulement (clapet anti-retour).

L'eau filtrée (eau douce) par le module 15 sort de celui-ci par un conduit 22, tandis que l'eau sursalée est transportée par un conduit 23 équipé de la vanne 24, du module 15 jusqu'à la chambre 16 « de récupération d'énergie » de la pompe 27.

La vanne 24 est également raccordée à un conduit 25 par lequel l'eau sursalée est vidangée de la chambre 16 à l'issue de chaque course de compression du piston 14 de la pompe 27, pendant la course - en sens inverse - du piston 14 permettant le remplissage de la chambre 17 par l'eau à pomper.

Le passage d'une configuration de la vanne 24 permettant le passage de l'eau sursalée provenant du module 15 jusqu'à la chambre 16, à une configuration de la vanne permettant l'évacuation de l'eau sursalée hors de la chambre 16, résulte de la rotation 29 du boisseau - i.e. de l'obturateur - de la vanne.

La rotation sensiblement continue de l'obturateur de la vanne résulte de l'entraînement de l'obturateur par le moteur, en synchronisme avec la pompe, par l'intermédiaire d'un arbre 26 d'entraînement de l'obturateur, cet arbre 26 étant relié à cet effet au mécanisme 11.

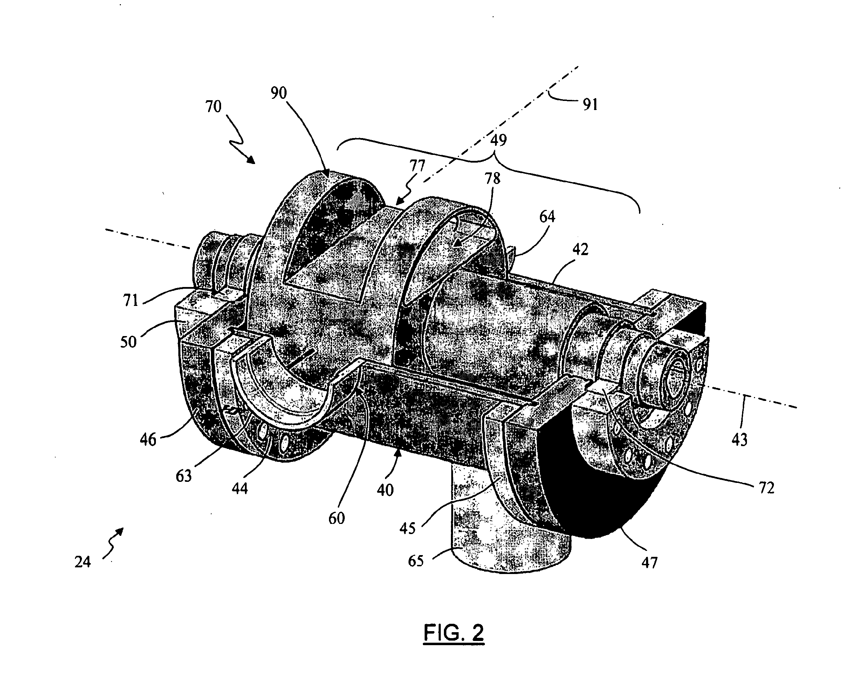

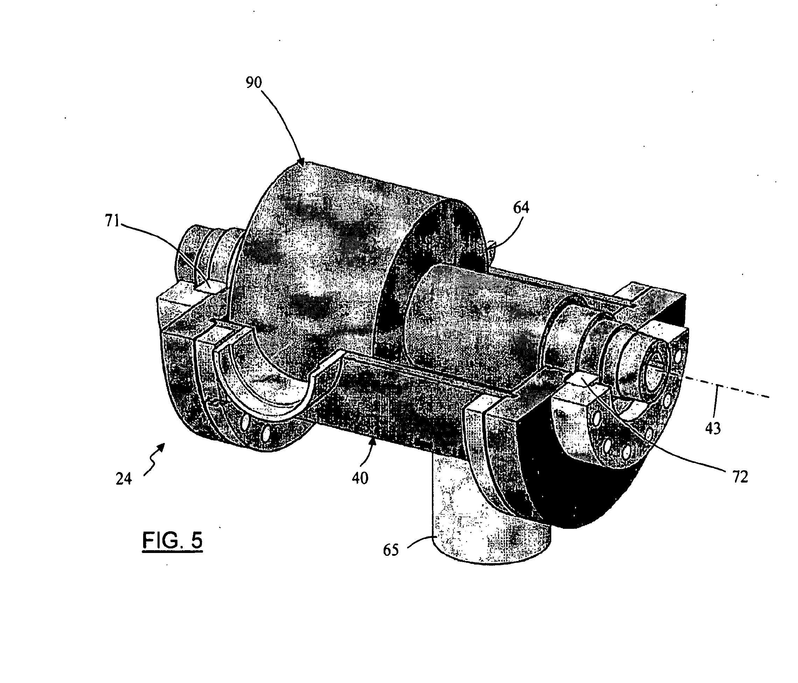

Par référence aux figures 2 et 4 à 9, la vanne 24 comporte un corps 40 délimitant une cavité 41.

Le corps 40 comporte une pièce centrale 42 tubulaire s'étendant selon un axe 43, deux brides circulaires 44 et 45 disposées et fixées - par soudure par exemple - aux deux extrémités longitudinales de la pièce centrale 42, et deux pièces 46 et 47 respectivement fixées aux brides 44, 45 par des vis (non représentées) par exemple.

Chaque pièce 46, 47 est en forme de disque épais et présente un orifice circulaire central ; un arbre 48 d'axe 43 s'étend au travers de ces deux orifices alésés, cet arbre étant solidaire en rotation de l'obturateur ou boisseau 49 de la vanne.

Le corps 40 comporte également deux pièces 50 et 51 respectivement fixées aux pièces 46, 47 par des vis (non représentées), chaque pièce 50, 51 étant en forme de disque épais, d'un diamètre extérieur inférieur à celui des pièces 46, 47, et présentant un orifice circulaire central aligné avec ceux des pièces 46, 47 et au travers duquel l'arbre 48 s'étend.

La virole tubulaire 42 du corps est percée de trois orifices circulaires : un premier orifice 60 permettant l'introduction d'eau dans la cavité 41, un second orifice 61 permettant l'évacuation d'eau hors de la cavité, et un troisième orifice 62 permettant de mettre en communication la cavité 41 et la chambre (repère 16 figure 1) de la pompe.

Pour le raccordement de la vanne au conduit (repère 23 figure 1) transportant l'eau sursalée provenant du filtre 15, le corps comporte un premier manchon tubulaire 63 s'étendant dans le prolongement de l'orifice 60.

Pour le raccordement de la vanne au conduit de vidange (repère 25 figure 1) de l'eau sursalée, le corps comporte un second manchon tubulaire 64 s'étendant dans le prolongement de l'orifice 61.

Pour le raccordement de la vanne au conduit (repère 23 figure 1) de transport de l'eau sursalée entre la vanne et la pompe, le corps comporte un troisième manchon tubulaire 65 s'étendant dans le prolongement de l'orifice 62.

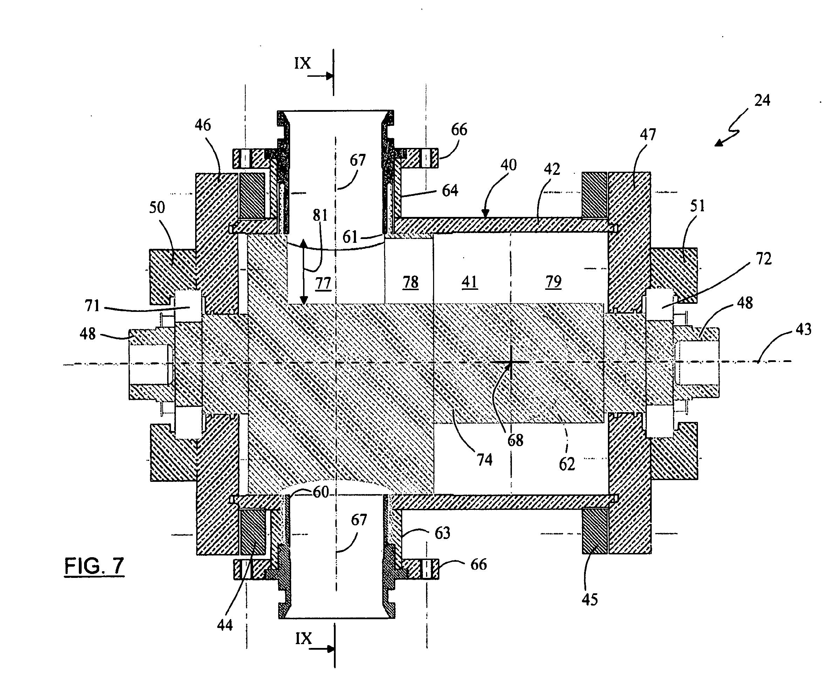

On peut observer figures 7 à 9 que chacun de ces trois manchons est fixé à la pièce tubulaire 42 par une première de ses extrémités, par exemple par soudure, et est muni d'une bride de raccordement 66 à proximité de sa seconde extrémité.

Les manchons 63 et 64 sont coaxiaux : ils s'étendent selon un axe 67 perpendiculaire à l'axe 43 et coupant ce dernier ; le manchon 65 s'étend selon un axe 68 également perpendiculaire à l'axe 43 et coupant ce dernier, les axes 67 et 68 étant orthogonaux sans être sécants.

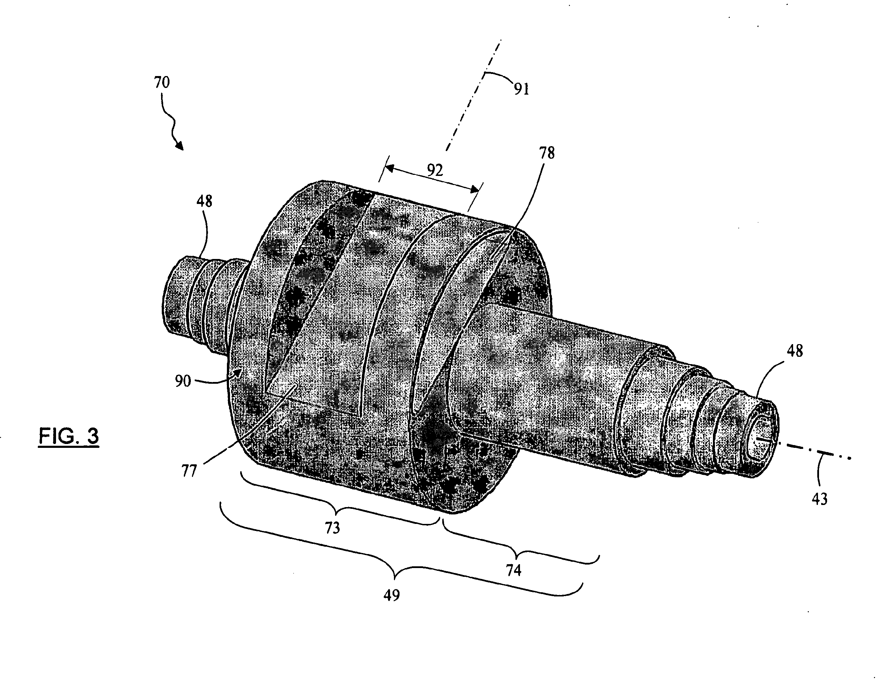

Par référence aux figures 2 à 6 notamment, le rotor 70 de la vanne comporte une partie centrale formant le boisseau 49 et deux parties d'extrémité s'étendant de part et d'autre du boisseau et formant deux bouts d'arbre 48 ; ces trois parties coaxiales, d'axe 43, peuvent former une seule pièce obtenue par usinage d'une ébauche métallique par exemple, ou bien peuvent être constituées de plusieurs pièces solidarisées ensemble.

On peut observer figures 2 et 4 à 8 que l'obturateur 49 est monté mobile en rotation à l'intérieur de la cavité 41 du corps de vanne ; à cet effet, le rotor 70 est monté dans les paliers formés dans les pièces 46, 47, 50, 51 par l'intermédiaire de deux roulements 71, 72 (à billes par exemple) emmanchés sur des portées formées sur l'arbre 48.

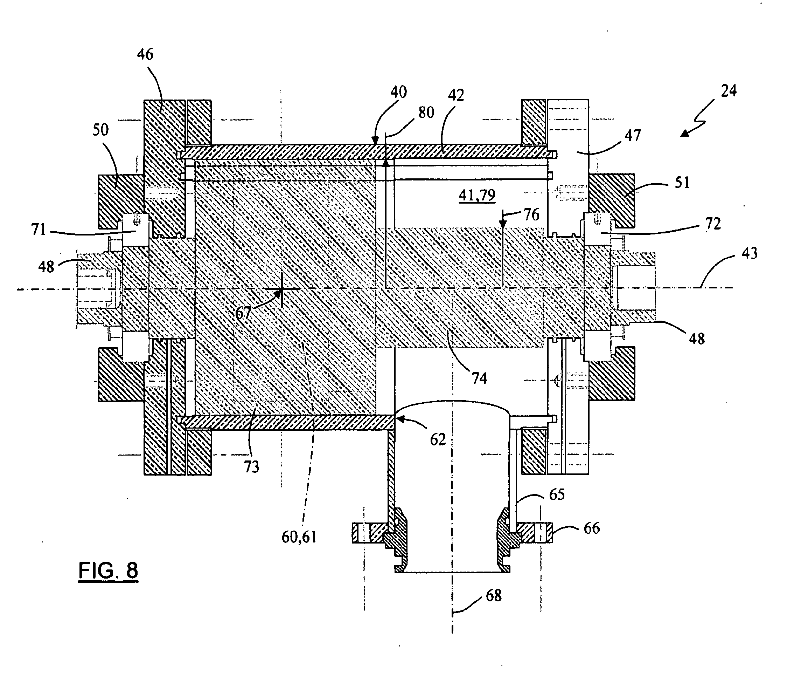

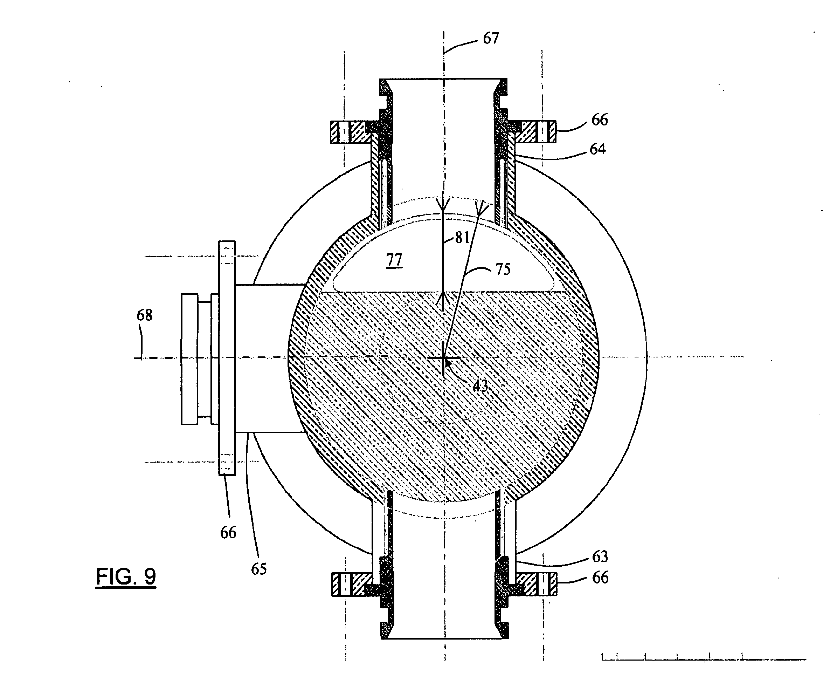

Par référence aux figures 2 à 6 notamment, l'obturateur est essentiellement constitué d'une première portion 73 délimitée par une enveloppe cylindrique d'axe 43 et de rayon 75 (cf. figure 9), et d'une seconde portion 74 cylindrique d'axe 43 et de rayon 76 (cf. figure 8) qui s'étend à partir de la première portion 73.

Le rayon 75 de la portion 73 est choisi peu inférieur au rayon 80 (cf. figure 8) de la cavité 41, par exemple inférieur à ce dernier de l'ordre de 0.1 millimètre (mm) lorsque le rayon 80 est de l'ordre de 100 mm, de façon à définir un jeu très faible entre la surface périphérique de la portion 73 de l'obturateur et la paroi 42 délimitant la cavité 41.

Le rayon 76 de la portion 74 est choisi inférieur au rayon 80 de la cavité 41, par exemple voisin du rayon commun aux orifices 60 à 62, de façon à ce que la portion 74 délimite avec la paroi 42 un espace 79 annulaire - ou seconde dépression - permettant le passage de l'eau entrant dans la vanne - ou sortant de celle-ci - par l'orifice 62 ; à cet effet, la portion 74 de l'obturateur - et le volume 79 - s'étendent de préférence sur une longueur au moins égale au diamètre de l'orifice 62 qui débouche dans le volume 79.

Comme illustré notamment figures 2 à 4, 7 et 9, la portion 73 de l'obturateur 49 comporte une dépression 77 sur sa face externe cylindrique 90.

Cette dépression en forme de rainure ou méplat s'étend le long d'un axe 91 orthogonal à l'axe 43 de révolution/rotation de l'obturateur, et présente une largeur 92 peu inférieure au diamètre des premier et second orifices 60, 61.

La profondeur 81 de la première dépression 77 est sensiblement égale à la différence entre le rayon 75 de l'obturateur - au droit de cette dépression - et le rayon commun (identique) des orifices 60, 61.

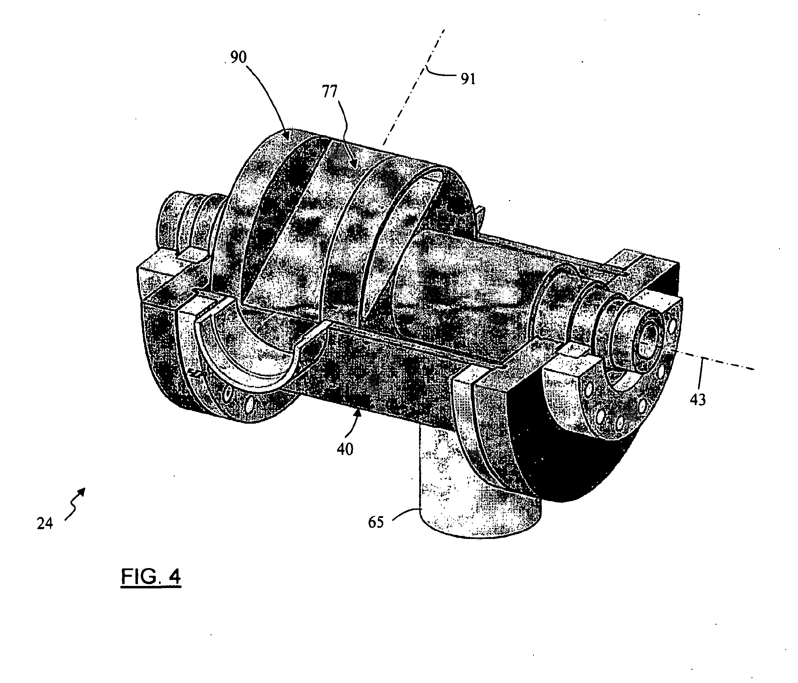

La dépression 77 contribue - avec le corps - à délimiter un passage - qui tourne avec l'obturateur - permettant la circulation d'eau entre les premier et troisième orifices dans des premières positions angulaires de l'obturateur, ce qui correspond à une configuration de la vanne illustrée figure 4 et permettant l'alimentation de la pompe.

A cet effet, un canal 78 est formé dans l'obturateur et relie les dépressions 77 et 79, comme illustré figures 2 à 4 et 7 notamment.

La section de ce canal 78 est de préférence au moins voisine de celle des premier et second orifices 60, 61 et/ou de celle de la rainure 77, afin de limiter les pertes de charge occasionnées par le passage de l'eau dans la vanne.

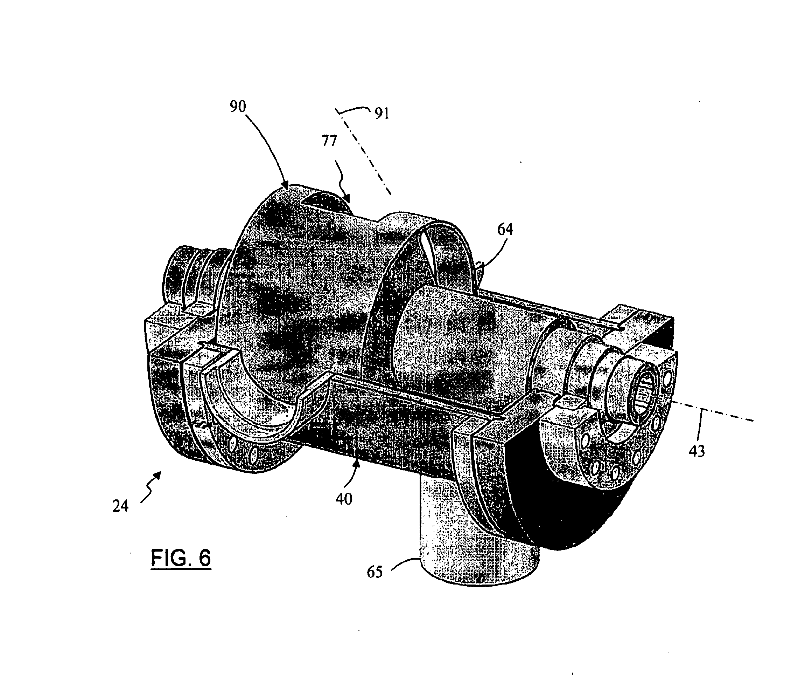

Le passage constitué des dépressions 77, 79 et du canal 78 permet en outre la circulation d'eau entre les second et troisième orifices 61, 62 dans des secondes positions angulaires de l'obturateur - correspondant à une configuration de la vanne permettant la vidange de la pompe - qui sont illustrées figures 6 et 9 notamment.

La vanne comporte en outre deux dispositifs d'étanchéité permettant respectivement d'assurer une obturation sensiblement étanche du premier orifice 60 par l'obturateur dans lesdites secondes positions angulaires de l'obturateur, i.e. en position de vidange, et d'assurer une obturation sensiblement étanche du second orifice 61 par l'obturateur dans lesdites premières positions angulaires de l'obturateur, i.e. en position d'alimentation en eau de la pompe.

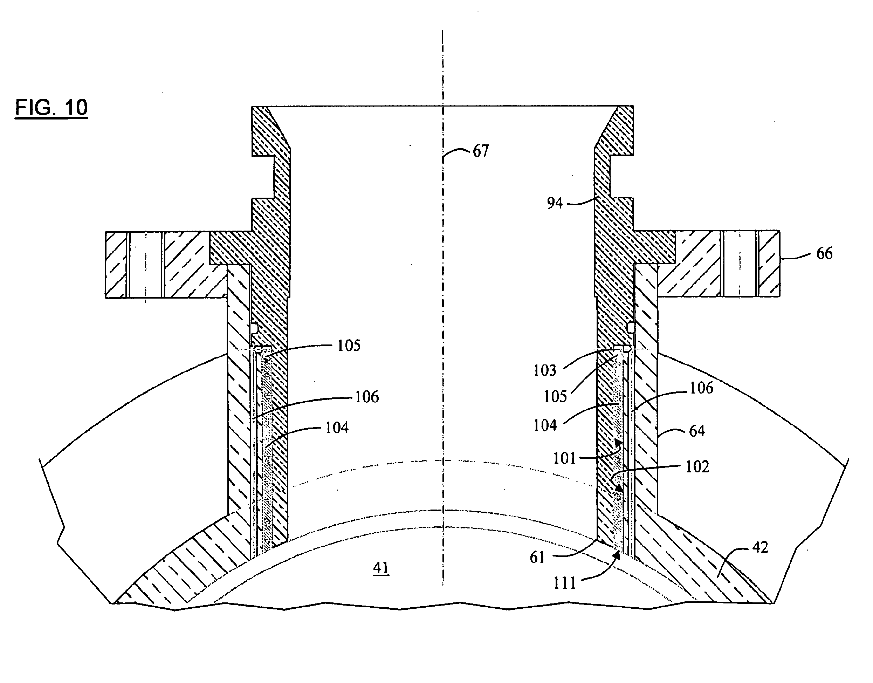

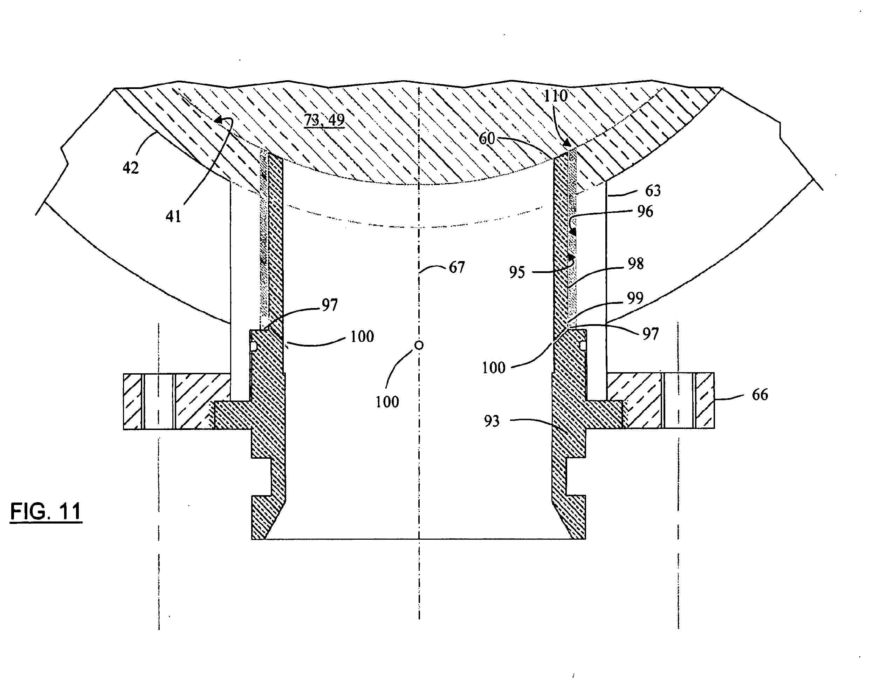

A cet effet, comme illustré figures 10 et 11, le corps comporte deux logements débouchant dans la cavité 41 et entourant respectivement les deux orifices 60, 61, ainsi que deux organes d'étanchéité respectivement disposés coulissants dans les deux logements.

Une douille 93, 94 est emmanchée respectivement dans chacun des manchons 63, 64 d'axe 67.

Concernant le manchon 63, figure 11, une face cylindrique externe 95 de la douille 93 s'étend coaxialement à une face cylindrique interne 96 du manchon 63, en regard de celle-ci, de façon à délimiter un logement 97 recevant une bague coulissante 98 d'étanchéité ainsi qu'un joint 99.

Concernant le manchon 64, figure 10, une face cylindrique externe 101 de la douille 94 s'étend coaxialement à une face cylindrique interne 102 du manchon 64, en regard de celle-ci, de façon à délimiter un logement 103 recevant une bague coulissante 104 d'étanchéité ainsi qu'un joint 105.

Les logements 97, 103 sont en forme de fentes annulaires et les organes 98, 104 d'étanchéité présentent une forme annulaire - ou tubulaire - adaptée aux dimensions des logements et à la forme de la partie de l'obturateur contre laquelle ils s'appliquent : chaque bague d'étanchéité 98, 104 présente, à son extrémité 110, 111 affleurant dans la cavité 41, une forme découpée selon un rayon correspondant au rayon de la partie cylindrique 73 de l'obturateur.

Un dispositif d'appui permet de mettre en appui la bague d'étanchéité 98 contre l'obturateur, afin d'assurer une obturation sensiblement étanche du premier orifice 60, par l'obturateur, dans des positions angulaires de l'obturateur dans lesquelles aucune portion de la rainure 77 n'est en regard de cet orifice.

Un dispositif similaire d'appui permet de mettre en appui la bague d'étanchéité 104 contre l'obturateur, afin d'assurer une obturation sensiblement étanche du second orifice 61, par l'obturateur, dans des positions angulaires de l'obturateur dans lesquelles aucune portion de la rainure 77 n'est en regard de cet orifice.

Chacun des dispositifs d'appui comporte plusieurs canaux qui relie(nt) une extrémité (du logement considéré) qui est opposée à l'extrémité du logement considéré qui débouche dans la cavité, à l'amont - par référence au sens d'écoulement de l'eau dans la vanne - de l'orifice considéré : le dispositif d'appui associé à l'organe 98 d'étanchéité entourant le premier orifice 60, comporte quatre canaux 100 répartis angulairement autour de l'axe 67, reliant chacun l'extrémité non débouchante du logement 97 à la face interne de la douille 93 du manchon 63.

De façon similaire, le dispositif d'appui associé à l'organe 104 d'étanchéité entourant le second orifice 61, comporte quatre canaux 106 répartis angulairement autour de l'axe 67 et parallèles à ce dernier, qui sont formés à l'intérieur du manchon 64, et relient chacun l'extrémité non débouchante du logement 103, à la cavité 41.

Les canaux 100 permettent de mettre en équipression l'extrémité non débouchante du logement 97 et le conduit transportant l'eau venant du module de filtration.

Les canaux 100 permettent par conséquent de plaquer contre l'obturateur 49 l'extrémité « profilée » de chacun de l'organe 98 d'étanchéité coulissant, en raison de la différence entre les pressions d'eau qui s'appliquent aux deux extrémités opposées de l'organe 98.

De façon similaire, les canaux 106 permettent de mettre en équipression l'extrémité non débouchante du logement 103 et la cavité 41, et permettent par conséquent de plaquer contre l'obturateur l'extrémité « profilée » de chacun de l'organe 104 d'étanchéité coulissant, en raison de la différence entre les pressions qui s'appliquent à aux extrémités opposées de l'organe 104.

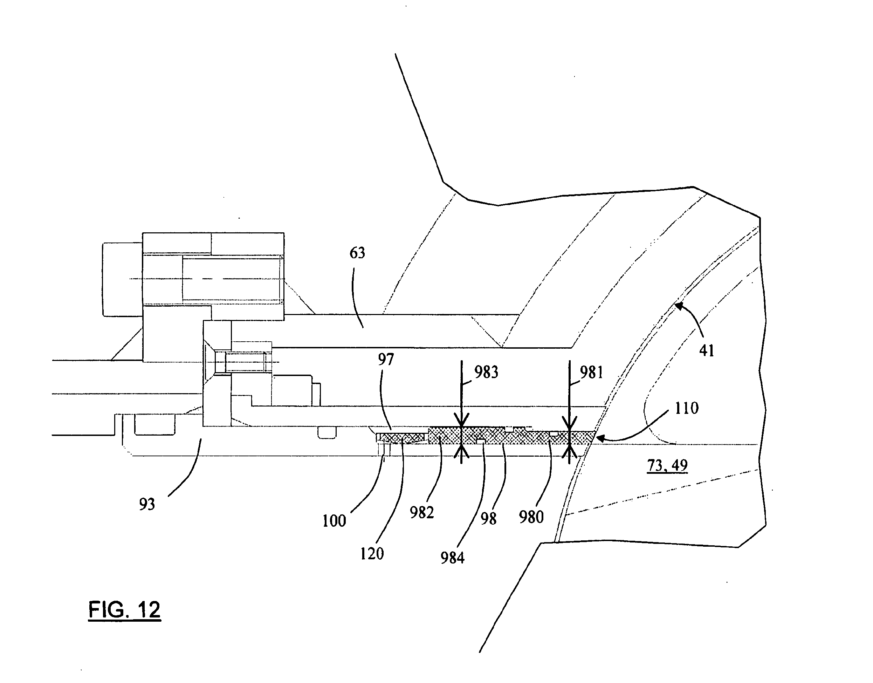

Dans le mode de réalisation illustré figure 12, l'organe d'étanchéité 98 comporte une première portion annulaire 980 présentant une première épaisseur 981 et dont une extrémité affleure à la surface du corps délimitant la cavité 41.

L'organe 98 comporte une seconde portion annulaire 982 coaxiale à - et prolongeant - la première portion annulaire 980.

Cette seconde portion qui s'étend en regard - et au voisinage - de l'extrémité non débouchante du logement 97 et des canaux 100, présente une épaisseur 983 supérieure à l'épaisseur 981, de sorte que la bague 98 est repoussée vers l'obturateur lorsque ses deux extrémités longitudinales sont soumises à la même pression.

Pour éviter (ou limiter) le passage d'eau dans les interstices s'étendant entre la bague 98 et le logement 97 dans lequel la bague peut coulisser, chacune des portions annulaires 980, 982 de la bague est munie d'un logement annulaire - tel que celui repéré 984 - recevant un organe torique d'étanchéité (non représenté).

Par ailleurs, un organe 120 élastiquement déformable, en forme de bague formant un ressort, est disposé dans le logement 97 recevant la bague 98, entre l'extrémité non débouchante du logement 97 et l'extrémité de la portion 982 de la bague 98.

La bague élastique 120 est agencée pour maintenir en contact mutuel l'obturateur 49 et l'extrémité 110 de la bague 98 d'étanchéité lorsque la vanne n'est pas entrainée et/ou qu'aucun courant d'eau ne la traverse.

## Revendications

1. Vanne (24) comportant :
- un corps (40) de vanne délimitant une cavité (41), le corps étant pourvu d'un premier orifice (60) permettant l'introduction d'eau dans la cavité, d'un second orifice (61) permettant l'évacuation d'eau hors de la cavité, et d'un troisième orifice (62) permettant de mettre en communication la cavité (41) et une chambre (16);
- un obturateur ou boisseau (49) monté mobile en rotation à l'intérieur de la cavité, l'obturateur comportant une (première) dépression (77) sur sa face externe (90), cette dépression contribuant, avec le corps (40), à délimiter un passage permettant la circulation d'eau entre les premier et troisième orifices (60, 62) dans des premières positions angulaires de l'obturateur, ledit passage permettant la circulation d'eau entre les second et troisième orifices (61, 62) dans des secondes positions angulaires de l'obturateur;
- un premier dispositif d'étanchéité arrangé pour assurer une obturation sensiblement étanche du premier orifice (60) par l'obturateur dans lesdites secondes positions angulaires de l'obturateur ; et
- un second dispositif d'étanchéité arrangé pour assurer une obturation sensiblement étanche du second orifice (61) par l'obturateur dans lesdites premières positions angulaires de l'obturateur,
la vanne étant **caractérisée en ce que** les premier et second dispositifs d'étanchéité comportent chacun un logement (97, 103) débouchant dans la cavité (41) et entourant respectivement les premier et second orifices (60, 61), un organe (98, 104) d'étanchéité disposé coulissant dans chaque logement, ainsi qu'un dispositif d'appui pour mettre en appui contre l'obturateur, l'organe d'étanchéité correspondant, **en ce que** les logements sont en forme de fentes annulaires et les organes d'étanchéité présentent une forme annulaire - ou tubulaire - adaptée à la forme de la partie de l'obturateur contre laquelle ils s'appliquent, en particulier une forme découpée en biseau selon un rayon correspondant au rayon d'une partie cylindrique de l'obturateur, et **en ce que** le dispositif d'appui associé à l'organe d'étanchéité entourant le premier orifice (60) comporte au moins un canal (100) reliant l'extrémité non débouchante du logement (97) à la face interne d'un manchon (63, 93) de raccordement de la vanne à un conduit, tandis que le dispositif d'appui associé à l'organe d'étanchéité entourant le second orifice (61), comporte au moins un canal (106) reliant l'extrémité non débouchante du logement (103), à la cavité (41).

2. Vanne selon la revendication 1 dans laquelle ledit passage comporte une seconde dépression (79) à la périphérie de l'obturateur, qui s'étend en regard du troisième orifice, ainsi qu'un canal (78) formé dans l'obturateur et reliant les première et seconde dépressions (77, 79).

3. Vanne selon l'une quelconque des revendications 1 ou 2 dans laquelle la première dépression (77) est en forme de rainure ou méplat s'étendant le long d'un axe (91) orthogonal à l'axe (43) de rotation de l'obturateur, et présente une largeur (92) inférieure au diamètre des premier et second orifices.

4. Vanne selon l'une quelconque des revendications 1 à 3 dans laquelle les diamètres respectifs des premier et second orifices sont égaux, et la profondeur (81) de la première dépression (77) est sensiblement égale à la différence entre le rayon (75) de l'obturateur - au droit de cette dépression - et le rayon des orifices (60, 61).

5. Vanne selon l'une quelconque des revendications 1 à 4 dans laquelle les premier et second orifices sont en regard mutuel, alignés selon un axe (67) sensiblement orthogonal à l'axe (43) de révolution de la cavité (41), ces deux axes étant sensiblement coplanaires.

6. Vanne selon l'une quelconque des revendications 1 à 5 dans laquelle le corps de vanne est percé de deux autres orifices en regard mutuel, alignés selon un axe (43) sensiblement confondu avec l'axe de révolution de la cavité, et l'obturateur est solidaire en rotation d'un arbre (48) d'entraînement s'étendant au travers de ces deux orifices.

7. Vanne selon l'une quelconque des revendications 1 à 6 dans laquelle les premières positions angulaires de l'obturateur sont adjacentes de manière à former une première plage angulaire continue de premières positions angulaires de l'obturateur, et dans laquelle les secondes positions angulaires de l'obturateur sont adjacentes de manière à former une seconde plage angulaire continue de secondes positions angulaires de l'obturateur, et dans laquelle chacune des première et seconde plages angulaires continues s'étend sensiblement sur 180° (degrés d'angle).

8. Vanne selon l'une quelconque des revendications 1 à 7 dans laquelle chacun des organes d'étanchéité de forme annulaire comporte une première portion annulaire (980) présentant une première épaisseur (981) et dont une extrémité affleure à la surface du corps délimitant la cavité (41), et chacun des organes d'étanchéité comporte une seconde portion annulaire (982) présentant une seconde épaisseur (983) et dont une extrémité s'étend en regard - et au voisinage - de l'extrémité non débouchante du logement (97, 103) correspondant, la seconde épaisseur étant supérieure à la première épaisseur.

9. Vanne selon l'une quelconque des revendications 1 à 8 dans laquelle chacun des dispositifs d'appui comporte un organe (120) élastiquement déformable, tel qu'un ressort, disposé dans le logement (97, 103) correspondant, entre l'extrémité non débouchante du logement et l'extrémité de l'organe d'étanchéité correspondant, et agencé pour maintenir en contact mutuel l'obturateur et l'organe d'étanchéité lorsque la vanne n'est pas entrainée et qu'aucun courant d'eau ne la traverse.

10. Installation de traitement d'eau comportant un module (15) de filtration d'eau, une pompe (27) à piston (14), un moteur (10), un mécanisme (11) d'entraînement de la pompe par le moteur, ainsi qu'une vanne selon l'une quelconque des revendications 1 à 9, la vanne équipant un conduit (23) reliant la pompe au module de filtration, l'obturateur (49) de la vanne étant arrangé pour être entraîné en rotation sensiblement continue par le moteur, en synchronisme avec la pompe.

11. Installation de traitement d'eau comportant un module (15) de filtration d'eau, une pompe (27) à piston (14), un moteur (10), un mécanisme (11) d'entraînement de la pompe par le moteur, ainsi qu'une vanne (24) selon l'une quelconque des revendications 1 à 9 et réalisé sous la forme d'une vanne à trois voies comportant un corps délimitant une cavité et un obturateur monté mobile en rotation dans la cavité, la vanne (24) équipant un conduit (23) de transport d'eau sursalée reliant une chambre (16) de récupération d'énergie de la pompe (27) au module de filtration, l'obturateur (49) de la vanne étant arrangé pour être entraîné en rotation sensiblement continue par le moteur.

12. Installation selon la revendication 11 dans laquelle la vanne présente des caractéristiques de l'une quelconque des revendications 1 à 9.

13. Installation selon l'une quelconque des revendications 10 à 12 dans laquelle la vanne (24) est raccordée à un conduit (25) par lequel l'eau sursalée est vidangée de la chambre (16) de récupération d'énergie de la pompe (27),à l'issue de chaque course de compression du piston (14) de la pompe (27), pendant la course - en sens inverse - du piston (14) permettant le remplissage, par l'eau à pomper, d'une chambre (17) de pompage de la pompe (27).

14. Installation selon l'une quelconque des revendications 10 à 13 dans laquelle le passage d'une configuration de la vanne (24) permettant le passage de l'eau sursalée provenant du module (15) jusqu'à la chambre (16) de récupération d'énergie de la pompe (27), à une configuration de la vanne permettant l'évacuation de l'eau sursalée hors de la chambre (16) de récupération d'énergie de la pompe (27), résulte de la rotation (29) du boisseau de la vanne.

15. Installation selon l'une quelconque des revendications 10 à 14 dans laquelle le corps (40) comporte un premier manchon tubulaire (63) s'étendant dans le prolongement de l'orifice (60), pour le raccordement de la vanne au conduit (23) transportant l'eau sursalée provenant du filtre (15).

16. Installation selon l'une quelconque des revendications 10 à 15 dans laquelle le corps (40) comporte un second manchon tubulaire (64) s'étendant dans le prolongement de l'orifice (61) pour le raccordement de la vanne à un conduit (25) de vidange de l'eau sursalée.

17. Installation selon l'une quelconque des revendications 10 à 16 dans laquelle le corps (40) comporte un troisième manchon tubulaire (65) s'étendant dans le prolongement de l'orifice (62), pour le raccordement de la vanne au conduit (23) de transport de l'eau sursalée entre la vanne et la pompe.

## Patentansprüche

1. Ventil (24), umfassend:
- einen Körper (40) des Ventils, der einen Hohlraum (41) begrenzt, wobei der Körper mit einer ersten Öffnung (60) versehen ist, die die Einführung von Wasser in den Hohlraum ermöglicht, mit einer zweiten Öffnung (61), die die Entleerung von Wasser aus dem Hohlraum ermöglicht, und mit einer dritten Öffnung (62), die es ermöglicht, den Hohlraum (41) und eine Kammer (16) miteinander in Verbindung zu bringen;
- einer Absperrung oder eines Kugelhahns (49), der beweglich in Drehung im Inneren des Hohlraums angeordnet ist, wobei die Absperrung eine (erste) Vertiefung (77) auf ihrer äußeren Seite (90) umfasst, wobei diese Vertiefung mit dem Körper (40) dazu beiträgt, einen Durchgang zu begrenzen, der die Zirkulation von Wasser zwischen der ersten und der dritten Öffnung (60, 62) in ersten Winkelpositionen der Absperrung ermöglicht, wobei der Durchgang die Zirkulation von Wasser zwischen der zweiten und der dritten Öffnung (61, 62) in zweiten Winkelpositionen der Absperrung ermöglicht,
- eine erste Dichtigkeitsvorrichtung, die angeordnet ist, um eine im Wesentlichen dichte Absperrung der ersten Öffnung (60) durch die Absperrung in den zweiten Winkelpositionen der Absperrung sicherzustellen; und
- eine zweite Dichtigkeitsvorrichtung, die angeordnet ist, um eine im Wesentlichen dichten Absperrung der zweiten Öffnung (61) durch die Absperrung in den ersten Winkelpositionen der Absperrung sicherzustellen,
wobei das Ventil **dadurch gekennzeichnet ist, dass** die erste und die zweite Dichtigkeitsvorrichtung jeweils ein Lager (97, 103) aufweisen, die in den Hohlraum (41) münden und jeweils die erste und die zweite Öffnung (60, 61) umgeben, wobei ein Dichtigkeitsorgan (98, 104) gleitbar in jedem Lager angeordnet ist, ebenso wie eine Stützvorrichtung, , dem entsprechenden Dichtigkeitsorgan gegen die Absperrung einen Halt zu geben, dadurch, dass die Lager die Form von runden Schlitzen aufweisen und die Dichtigkeitsorgane eine runde - oder rohrförmige - Form aufweisen, die an die Form des Teils der Absperrung, gegen den sie angewendet werden, angepasst ist, insbesondere eine Form, die gemäß einem Radius, der dem Radius eines zylindrischen Teils der Absperrung entspricht, schräg abgeschnitten ist, und dadurch, dass die Stützvorrichtung, die mit dem Dichtigkeitsorgan assoziiert ist, das die erste Öffnung (60) umgibt, mindestens einen Kanal (100) umfasst, der das nicht einmündende Ende des Lagers (97) mit der inneren Seite einer Verbindungsmuffe (63, 93) des Ventils mit einem Kanal verbindet, während die Stützvorrichtung, die mit dem Dichtigkeitsorgan assoziiert ist, das die zweite Öffnung (61) umgibt, mindestens einen Kanal (106) aufweist, der das nicht einmündende Ende des Lagers (103) mit dem Hohlraum (41) verbindet.

2. Ventil nach Anspruch 1, wobei der Durchgang eine zweite Vertiefung (79) am Umfang der Absperrung umfasst, die sich gegenüber der dritten Öffnung erstreckt, ebenso wie einen Kanal (78), der in der Absperrung gebildet ist und die erste und die zweite Vertiefung (77, 79) miteinander verbindet.

3. Ventil nach einem der Ansprüche 1 oder 2, wobei die erste Vertiefung (77) die Form einer Nut oder einer Abflachung aufweist, die sich entlang einer Achse (91) erstreckt, die orthogonal zur Rotationsachse (43) der Absperrung ist und eine Breite (92) aufweist, die kleiner als der Durchmesser der ersten und der zweiten Öffnung ist.

4. Ventil nach einem der Ansprüche 1 bis 3, wobei die jeweiligen Durchmesser der ersten und der zweiten Öffnung gleich sind" und die Tiefe (81) der ersten Vertiefung (77) im Wesentlichen gleich dem Unterschied zwischen dem Radius (75) der Absperrung - - rechts von dieser Vertiefung - und dem Radius der Öffnungen (60, 61) ist.

5. Ventil nach einem der Ansprüche 1 bis 4, wobei die erste und die zweite Öffnung einander gegenüber liegen, ausgefluchtet gemäß einer Achse (67), die im Wesentlichen orthogonal zur Drehachse (43) des Hohlraums (41) ist, wobei diese zwei Achse im Wesentlichen koplanar sind.

6. Ventil nach einem der Ansprüche 1 bis 5, wobei der Köper des Ventils von zwei weiteren Öffnungen, die einander gegenüber liegen, durchbrochen ist, ausgefluchtet gemäß einer Achse (43), die im Wesentlichen mit der Drehachse des Hohlraums vereinigt ist, und der Verschluss in der Drehung mit einer Antriebswelle (48) fest verbunden ist, die sich über diese zwei Öffnungen erstreckt.

7. Ventil nach einem der Ansprüche 1 bis 6, wobei die ersten Winkelpositionen der Absperrung einander benachbart sind, so dass sie einen ersten ununterbrochenen Winkelbereich von ersten Winkelpositionen der Absperrung bilden, und wobei die zweiten Winkelpositionen der der Absperrung einander benachbart sind, so dass sie einen zweiten ununterbrochenen Winkelbereich von zweiten Winkelpositionen der Absperrung bilden, und wobei sich jeder des ersten und des zweiten ununterbrochenen Winkelbereichs im Wesentlichen über 180º (Winkelgrad) erstreckt.

8. Ventil nach einem der Ansprüche 1 bis 7, wobei jedes der Dichtigkeitsorgane mit runder Form einen ersten runden Abschnitt (980) mit einer ersten Dicke (981) aufweist, und wobei ein Ende an der Oberfläche des Körpers austritt, der den Hohlraum (41) begrenzt, und jedes der Dichtigkeitsorgane einen zweiten runden Abschnitt (982) mit einer zweiten Dicke (983) aufweist, und wobei sich ein Ende gegenüber dem - und benachbart vom - nicht einmündenden Ende des entsprechenden Lagers (97, 103) erstreckt, wobei die zweite Dicke größer als die erste Dicke ist.

9. Ventil nach einem der Ansprüche 1 bis 8, wobei jede der Stützvorrichtungen ein Organ (120) umfasst, das elastisch verformbar ist, wie z.B. eine Feder, die im entsprechenden Lager (97, 103) angeordnet ist, zwischen dem nicht einmündenden Ende des Lagers und dem Ende des entsprechenden Dichtigkeitsorgans, und angeordnet, um die Absperrung und das Dichtigkeitsorgan in gegenseitigen Kontakt zu halten, wenn der Ventil nicht angetrieben ist und keine Wasserströmung es durchquert.

10. Anlage zur Behandlung von Wasser, umfassend ein Modul (15) zur Filterung von Wasser, eine Pumpe (27) mit Kolben (14), einen Motor (10), einen Mechanismus (11) zum Antrieb der Pumpe durch den Motor, ebenso wie einen Ventil nach einem der Ansprüche 1 bis 9,wobei das Ventil ein Rohr (23) ausstattet, das die Pumpe mit dem Filtermodul verbindet, wobei die Absperrung (49) des Ventils angeordnet ist, um vom Motor synchron mit der Pumpe im Wesentlichen ununterbrochen in Drehung versetzt zu werden.

11. Anlage zur Behandlung von Wasser, umfassend ein Modul (15) zur Filterung von Wasser, eine Pumpe (27) mit Kolben (14), einen Motor (10), einen Mechanismus (11) zum Antrieb der Pumpe durch den Motor, ebenso wie ein Ventil (24) nach einem der Ansprüche 1 bis 9, und durchgeführt in der Form eines Dreiwegventils, umfassend einen Körper, der einen Hohlraum begrenzt, und einen Verschluss, der beweglich in Drehung im Hohlraum montiert ist, wobei das Ventil (24) ein Rohr (23) zum Transport von Salzlake ausstattet, das eine Kammer (16) zur Wiedergewinnung von Energie von der Pumpe (27) mit dem Filtermodul verbindet, wobei die Absperrung (49) des Ventils angeordnet ist, um vom Motor im Wesentlichen ununterbrochen in Drehung versetzt zu werden.

12. Anlage nach Anspruch 11, wobei das Ventil Merkmale eines der Ansprüche 1 bis 9 aufweist.

13. Anlage nach einem der Ansprüche 10 bis 12,wobei das Ventil (24) mit einem Rohr (25) verbunden ist, durch das die Salzlake aus der Kammer (16) zur Wiedergewinnung von Energie von der Pumpe (27) entleert wird, am Ende jedes Verdichtungstakts des Kolbens (14) der Pumpe (27), während des Takts - im entgegengesetzten Sinn - des Kolbens (14), der die Füllung, durch das zu pumpende Wasser, einer Pumpkammer (17) der Pumpe (27) ermöglicht.

14. Anlage nach einem der Ansprüche 10 bis 13, wobei sich der Durchgang von einer Konfiguration des Ventils (24), der den Durchfluss von Salzlake von einem Modul (15) bis zur Kammer (16) zur Wiedergewinnung von Energie von der Pumpe (27) ermöglicht, zu einer Konfiguration des Ventils, die die Entleerung der Salzlake aus der Kammer (16) zur Wiedergewinnung von Energie von der Pumpe (27) ermöglicht, aus der Drehung (29) des Kugelhahn des Ventils ergibt.

15. Anlage nach einem der Ansprüche 10 bis 14, wobei der Körper (40) eine erste rohrförmige Muffe (63) umfasst, die sich in der Verlängerung der Öffnung (60) erstreckt, für die Verbindung des Ventils mit dem Rohr (23), das die Salzlake transportiert, die vom Filter (15) stammt.

16. Anlage nach einem der Ansprüche 10 bis 15, wobei der Körper (40) eine zweite rohrförmige Muffe (64) umfasst, die sich in der Verlängerung der Öffnung (61) erstreckt, für die Verbindung des Ventils mit einem Rohr (25) zur Entleerung der Salzlake.

17. Anlage nach einem der Ansprüche 10 bis 15, wobei der Körper (40) eine dritte rohrförmige Muffe (65) umfasst, die sich in der Verlängerung der Öffnung (62) erstreckt, für die Verbindung des Ventils mit dem Rohr (23) zum Transport der Salzlake zwischen dem Ventil und der Pumpe.

## Claims

1. A valve (24) comprising:
- a valve body (40) delimiting a cavity (41), the body being provided with a first orifice (60) allowing water to enter the cavity, with a second orifice (61) allowing water to be discharged from the cavity, and a third orifice (62) making it possible to place the cavity (41) and a chamber (16) in communication;
- a stopper or plug (49) mounted to as to be able to rotate inside the cavity, the stopper comprising a (first) recess (77) on its outer face (90), this recess helping, with the body (40), to delimit a passageway allowing water to travel between the first and third orifices (60, 62) in first angular positions of the stopper, said passageway allowing water to travel between the second and third orifices (61, 62) in second angular positions of the stopper;
- a first sealing device arranged so as to provide a substantially watertight stopping of the first orifice (60) by the stopper in said second angular positions of the stopper; and
- a second sealing device arranged so as to provide a substantially watertight stopping of the second orifice (61) by the stopper in said first angular positions of the stopper,
the valve being **characterized in that** the first and second sealing devices each comprise a housing (97, 103) leading into the cavity (41) and surrounding respectively the first and second orifices (61, 62), a sealing member (98, 104) placed so as to slide in each housing, and a pressing device for pressing the corresponding sealing member against the stopper, **in that** the housings are in the shape of annular slots and the sealing members have an annular - or tubular - shape adapted to the shape of the portion of the stopper against which they are pressed, in particular a shape cut away like a bevel on a radius corresponding to the radius of a cylindrical portion of the stopper, and **in that** the pressing device associated with the sealing member surrounding the first orifice (60) comprises at least one channel (100) connecting the non-open end of the housing (97) to the inner face of a sleeve (63, 93) for connecting the valve to a duct, while the pressing device associated with the sealing member surrounding the second orifice (61) comprises at least one channel (106) connecting the non-open end of the housing (103) to the cavity (41).

2. The valve as claimed in claim 1, wherein said passageway comprises a second recess (79), on the periphery of the stopper, which extends facing the third orifice, and a channel (78) formed in the stopper and connecting the first and second recesses (77, 79).

3. The valve as claimed in any one of claims 1 or 2, wherein the first recess (77) is in the shape of a groove or flat extending along an axis (91) orthogonal to the axis (43) of rotation of the stopper, and has a width (92) smaller than the diameter of the first and second orifices.

4. The valve as claimed in any one of claims 1 to 3, wherein the respective diameters of the first and second orifices are equal, and the depth (81) of the first recess (77) is substantially equal to the difference between the radius (75) of the stopper - in line with this recess - and the radius of the orifices (60, 61).

5. The valve as claimed in any one of claims 1 to 4, wherein the first and second orifices are facing one another, aligned along an axis (67) substantially orthogonal to the axis (43) of revolution of the cavity (41), these two axes being substantially coplanar.

6. The valve as claimed in any one of claims 1 to 5, wherein the valve body is pierced with two other orifices facing one another, aligned along an axis (43) that is substantially indistinguishable from the axis of revolution of the cavity, and the stopper is secured in rotation to a drive shaft (48) extending through these two orifices.

7. The valve as claimed in any one of claims 1 to 6, wherein the first angular positions of the stopper are adjacent so as to form a first continuous angular range of first angular positions of the stopper, and wherein the second angular positions of the stopper are adjacent so as to form a second continuous angular range of second angular positions of the stopper, and wherein each of the first and second continuous angular ranges extends substantially over 180° (angle degrees).

8. The valve as claimed in any one of claims 1 to 7, wherein each of the annular-shaped sealing members comprises a first annular portion (980) having a first thickness (981) and of which one end is flush with the surface of the body delimiting the cavity (41), and each of the sealing members comprises a second annular portion (982) having a second thickness (983) and of which one end extends facing - and in the vicinity of - the non-open end of the corresponding housing (97, 103), the second thickness being greater than the first thickness.

9. The valve as claimed in any one of claims 1 to 8, wherein each of the pressing devices comprises an elastically deformable member (120), such as a spring, placed in the corresponding housing (97, 103), between the non-open end of the housing and the end of the corresponding sealing member, and arranged so as to keep the stopper and the sealing member in mutual contact when the valve is not operated and when no water current passes through it.

10. A water-treatment plant comprising a water-filtration module (15), a pump (27) with a piston (14), a motor (10), a mechanism (11) for the driving of the pump by the motor, and a valve as claimed in any one of claims 1 to 9, the valve being fitted to a duct (23) connecting the pump to the filtration module, the stopper (49) of the valve being arranged so as to be rotated substantially continuously by the motor, in synchronism with the pump.

11. The water-treatment plant comprising a water-filtration module (15), a pump (27) with a piston (14), a motor (10), a mechanism (11) for the driving of the pump by the motor, and a valve as claimed in any one of claims 1 to 9 and made in the shape of a three-way valve (24) comprising a body delimiting a cavity and a stopper mounted so as to rotate in the cavity, the valve (24) fitted to a duct (23) for conveying brine connecting a chamber (16) for recovering energy of the pump (27) to the filtration module, the stopper (49) of the valve being arranged so as to be rotated substantially continuously by the motor.

12. The plant as claimed in claim 11, wherein the valve has features of any one of claims 1 to 9.

13. The plant as claimed in any one of claims 10 to 12, wherein the valve (24) is connected to a duct (25) through which the brine is discharged from the chamber (16) for recovering energy of the pump (27), after each compression stroke of the piston (14) of the pump (27), during the stroke - in the reverse direction - of the piston (14) allowing the filling, by the water to be pumped, of a pumping chamber (17) of the pump (27).

14. The plant as claimed in any one of claims 10 to 13, wherein the transition from a configuration of the valve (24) allowing the passage of the brine originating from the module (15) to the chamber (16) for recovering energy of the pump (27), to a configuration of the valve allowing the discharge of the brine from the chamber (16) for recovering energy of the pump (27), results from the rotation (29) of the plug of the valve.

15. The plant as claimed in any one of claims 10 to 14, wherein the body (40) comprises a first tubular sleeve (63) extending in line with the orifice (60), for the connection of the valve to the duct (23) conveying the brine originating from the filter (15).

16. The plant as claimed in any one of claims 10 to 15, wherein the body (40) comprises a second tubular sleeve (64) extending in line with the orifice (61) for the connection of the valve to a duct (25) for discharging the brine.

17. The plant as claimed in any one of claims 10 to 16, wherein the body (40) comprises a third tubular sleeve (65) extending in line with the orifice (62) for the connection of the valve to the duct (23) for conveying the brine between the valve and the pump.
